# EUROPÄISCHE PATENTSCHRIFT

(11) **EP 3 807 704 B1**
(45) Veröffentlichungstag und Bekanntmachung des Hinweises auf die Patenterteilung: **10.09.2025**
(21) Anmeldenummer: 19731920.5
(22) Anmeldetag: 13.06.2019
(51) Int. Cl.: G02B 27/01, F21V 8/00

(54) **GERÄT ZUM GENERIEREN EINES VIRTUELLEN BILDES MIT FELDPUNKTABHÄNGIGER APERTUR**
APPARATUS FOR GENERATING A VIRTUAL IMAGE HAVING FIELD POINT DEPENDENT APERTURE
APPAREIL POUR LA GÉNÉRATION D'UNE IMAGE VIRTUELLE COMPRENANT UNE OUVERTURE DÉPENDANT DU POINT DE CHAMP

(30) Priorität: 15.06.2018 DE 102018209625; 03.08.2018 DE 102018212994
(43) Veröffentlichungstag der Anmeldung: 21.04.2021
(73) Patentinhaber: Continental Automotive Technologies GmbH, 30175 Hannover (DE)
(72) Erfinder: KERN, Thorsten Alexander, 65824 Schwalbach a. Ts. (DE); VON SPIEGEL, Wolff, 65824 Schwalbach a. Ts. (DE)
(74) Vertreter: Aumovio Corporation
(86) Internationale Anmeldenummer: PCT/EP2019/065539
(87) Internationale Veröffentlichungsnummer: WO 2019/238842

(56) Entgegenhaltungen:
- WO-A1-2014/009717
- DE-A1- 102016 220 742

## Beschreibung

Die vorliegende Erfindung betrifft ein Gerät zum Generieren eines virtuellen Bildes.

Unter einem Head-Up-Display, auch als HUD bezeichnet, wird ein Anzeigesystem verstanden, bei dem der Betrachter seine Blickrichtung beibehalten kann, da die darzustellenden Inhalte in sein Sichtfeld eingeblendet werden. Während derartige Systeme aufgrund ihrer Komplexität und Kosten ursprünglich vorwiegend im Bereich der Luftfahrt Verwendung fanden, werden sie inzwischen auch im Automobilbereich in Großserie verbaut.

Head-Up-Displays bestehen im Allgemeinen aus einem Bildgenerator, einer Optikeinheit und einer Spiegeleinheit. Der Bildgenerator erzeugt das Bild. Die Optikeinheit leitet das Bild auf die Spiegeleinheit. Der Bildgenerator wird oft auch als bildgebende Einheit oder PGU (Picture Generating Unit) bezeichnet. Die Spiegeleinheit ist eine teilweise spiegelnde, lichtdurchlässige Scheibe. Der Betrachter sieht also die vom Bildgenerator dargestellten Inhalte als virtuelles Bild und gleichzeitig die reale Welt hinter der Scheibe. Als Spiegeleinheit dient im Automobilbereich oftmals die Windschutzscheibe, deren gekrümmte Form bei der Darstellung berücksichtigt werden muss. Durch das Zusammenwirken von Optikeinheit und Spiegeleinheit ist das virtuelle Bild eine vergrößerte Darstellung des vom Bildgenerator erzeugten Bildes.

Der Betrachter kann das virtuelle Bild nur aus der Position der sogenannten Eyebox betrachten. Als Eyebox wird ein Bereich bezeichnet, dessen Höhe und Breite einem theoretischen Sichtfenster entspricht. So lange sich ein Auge des Betrachters innerhalb der Eyebox befindet, sind alle Elemente des virtuellen Bildes für das Auge sichtbar. Befindet sich das Auge hingegen außerhalb der Eyebox, so ist das virtuelle Bild für den Betrachter nur noch teilweise oder gar nicht sichtbar. Je größer die Eyebox ist, desto weniger eingeschränkt ist der Betrachter somit bei der Wahl seiner Sitzposition.

Die Größe der Eyebox herkömmlicher Head-Up-Displays wird durch die Größe der Optikeinheit begrenzt. Ein Ansatz zur Vergrößerung der Eyebox besteht darin, das von der bildgebenden Einheit kommende Licht in einen Lichtwellenleiter einzukoppeln. Das in den Lichtwellenleiter eingekoppelte Licht wird an dessen Grenzflächen totalreflektiert und wird somit innerhalb des Lichtwellenleiters geleitet. Zusätzlich wird an einer Vielzahl von Positionen entlang der Ausbreitungsrichtung jeweils ein Teil des Lichts ausgekoppelt. Durch den Lichtwellenleiter erfolgt auf diese Weise eine Aufweitung der Austrittspupille. Die effektive Austrittspupille setzt sich hier aus Bildern der Apertur des Bilderzeugungssystems zusammen.

Vor diesem Hintergrund beschreibt die US 2016/0124223 A1 eine Anzeigevorrichtung für virtuelle Bilder. Die Anzeigevorrichtung umfasst einen Lichtwellenleiter, der bewirkt, dass von einer bildgebenden Einheit kommendes Licht, das durch eine erste Lichteinfallsfläche einfällt, wiederholt einer internen Reflexion unterzogen wird, um sich in einer ersten Richtung von der ersten Lichteinfallsfläche weg zu bewegen. Der Lichtwellenleiter bewirkt zudem, dass ein Teil des im Lichtwellenleiter geführten Lichts durch Bereiche einer ersten Lichtaustrittsfläche, die sich in der ersten Richtung erstreckt, nach außen austritt. Die Anzeigevorrichtung umfasst weiterhin ein erstes lichteinfallseitiges Beugungsgitter, das auftreffendes Licht beugt, um zu bewirken, dass das gebeugte Licht in den Lichtwellenleiter eintritt, und ein erstes lichtausfallendes Beugungsgitter, das vom Lichtwellenleiter einfallendes Licht beugt.

Ein typischer Bildgeber für Head-Up-Displays mit holographischem Lichtwellenleiter weist einen scannenden Projektor mit LED-basierten Lichtquellen auf. Durch die spektrale Breite sowie die Vielzahl von Abstrahlwinkeln ist bei LED-basierten Systemen eine gute Aperturabdeckung gewährleistet. Derartige Systeme sind daher wenig anfällig für Störeffekte, wie zum Beispiel das sogenannte Banding.

Zur Effizienzerhöhung und funktionalen Erweiterung von Head-Up-Displays mit holographischem Lichtwellenleiter ist es sinnvoll, statt LEDs Laser als Lichtquellen zu verwenden. Die Nutzung von Lasern als Lichtquellen hat allerdings den Nachteil, dass die Systeme deutlich weniger tolerant sind. Die Ausgangsapertur muss besonders sauber zusammengesetzt werden, um störende Effekte zu vermeiden. Aktuell werden komplexe Systeme genutzt, um eine variable Apertur für gleichmäßig gefüllte zusammengesetzte Aperturen zu realisieren. Diese Systeme bestehen aus verschiedenen Komponenten und sind aufwendig zu designen. Jede Komponente ist mit Toleranzen und einem Lichtverlust verbunden. Die Systeme benötigen zudem etwas von dem ohnehin beschränkten Bauraum und erhöhen sowohl das Gewicht als auch die Kosten des Head-Up-Displays.

Aus der WO 2014/009717 A1 ist ein Gerät gemäß Oberbegriff des Anspruch 1 bekannt. Aus der DE 10 2016 220 742 A1 ist ein Abtastprojektor-Durchlaßschirm bekannt.

Es ist eine Aufgabe der vorliegenden Erfindung, ein verbessertes Gerät zum Generieren eines virtuellen Bildes vorzuschlagen, bei dem auf einfache Weise eine feldpunktabhängige Apertur realisiert wird.

Diese Aufgabe wird durch ein Gerät mit den Merkmalen des Anspruchs 1 gelöst. Bevorzugte Ausgestaltungen der Erfindung sind Gegenstand der abhängigen Ansprüche.

Gemäß einem ersten Aspekt der Erfindung weist ein Gerät zum Generieren eines virtuellen Bildes auf:
- zumindest eine Lichtquelle zum Erzeugen eines Lichtstrahls;
- eine bildgebende Einheit zum Erzeugen eines Bildes, wobei die bildgebende Einheit einen Microscanner aufweist; und
- einen Lichtwellenleiter zum Aufweiten einer Austrittspupille;
wobei vor einem Einkoppelbereich des Lichtwellenleiters eine Anordnung umfassend ein erstes optisches Element mit einer ersten Brennweite, eine optische Komponente zum Realisieren einer feldpunktabhängigen Apertur und ein zweites optisches Element mit einer zweiten Brennweite angeordnet ist, wobei die optische Komponente eingerichtet ist, für unterschiedliche Auftreffpositionen eines ausgehend vom Microscanner nach Passieren des ersten optischen Elementes einfallenden Lichtstrahls den Lichtstrahl in unterschiedliche Raumwinkelbereiche zu lenken, wobei die optische Komponente ein Mikrolinsenarray mit entsprechend einer lokal aufgelösten Diffusorfunktion und Linsenfunktion variablen Linsenabständen und Brennweiten aufweist, und wobei die lokal aufgelöste Diffusorfunktion und Linsenfunktion so gewählt ist, dass ein Ausgangsstrahldurchmesser des Lichtstrahls nach dem Passieren des zweiten optischen Elementes gleich einer Periode der Auskopplung des Lichtstrahls.

Zur Realisierung der feldpunktabhängigen Apertur lenkt die optische Komponente für unterschiedliche Auftreffpositionen eines einfallenden Lichtstrahls den Lichtstrahl in unterschiedliche Raumwinkelbereiche. Die optische Komponente kann darüber hinaus weitere optische Funktionen beinhalten, z.B. eine fresnelisierte Linsenfunktion.

Durch die Propagation des Lichts im Lichtwellenleiter wird bei Lichtquellen mit kleiner Apertur, beispielsweise bei Lasern, keine Ausleuchtung der gesamten Eyebox durch jeden einzelnen Punkt der Bildgenerierung erreicht. Durch die erfindungsgemäß vorgesehene optische Komponente, die für den jeweiligen Bereich der Bildgenerierung spezifisch gestatltet ist, wird örtlich aufgelöst eine angepasste Apertur erzeugt. Dies ermöglicht eine homogenere Füllung der Auskoppelapertur des Lichtwellenleiters und damit der Eyebox.

Erfindungsgemäß weist die optische Komponente eine lokal aufgelöste Diffusorfunktion und Linsenfunktion auf. Die optische Komponente kann beispielsweise als flaches Kunststoffteil mit lokal aufgelöster Diffusor- und Linsenfunktion entsprechend der gewünschten Ortsfunktion für die Ablenkung der einfallenden Lichtstrahlen in die unterschiedlichen Raumwinkelbereiche ausgeführt sein.

Erfindungsgemäß weist die optische Komponente ein Mikrolinsenarray auf. Bei der Realisierung als Mikrolinsenarray können entsprechend der gewünschten Ortsfunktion angepasste variable Linsenabstände und Brennweiten genutzt werden.

Erfindungsgemäß weist die bildgebende Einheit einen Mikroscanner auf. Die erfindungsgemäße Lösung harmoniert besonders gut mit einem solchen Scanner, da durch den Scanner eine definierte Beziehung zwischen der Position eines einfallenden Lichtstrahls auf der optischen Komponente und dem zugehörigen Einfallswinkel gewährleistet ist. Gleichzeitig ermöglicht ein Mikroscanner die Realisierung einer besonders einfachen und kompakten bildgebenden Einheit. Der Mikroscanner kann beispielsweise ein MEMS-Scanner sein (MEMS: Microelectromechanical system; Mikrosystem) .

Gemäß einem Aspekt der Erfindung werden von der Lichtquelle ausgestrahlte Lichtstrahlen von dem ersten optischen Element auf die optische Komponente fokussiert. Durch die Fokussierung kann sichergestellt werden, dass von der Lichtquelle ausgestrahlte Lichtstrahlen auf einen gewünschten räumlich eng begrenzten Bereich der optischen Komponente treffen. Das erste optische Element, beispielsweise eine Linse, kann dabei optional auch Bildfehler reduzieren, z.B. die Bildfeldwölbung.

Gemäß einem Aspekt der Erfindung kollimiert das zweite optische Element von der optischen Komponente ausgehende Lichtstrahlen, d.h. durch das zweite optische Element werden die von der optischen Komponente geformten divergenten Lichtbündel parallelisiert. Dabei werden die Raumwinkelbereiche in räumliche Aperturflächen transformiert.

Vorzugsweise wird ein erfindungsgemäßes Gerät in einem Fahrzeug, insbesondere einem Kraftfahrzeug, eingesetzt.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Head-Up-Display gemäß dem Stand der Technik für ein Kraftfahrzeug;
- Fig. 2: zeigt einen Lichtwellenleiter mit zweidimensionaler Vergrößerung;
- Fig. 3: zeigt schematisch ein Head-Up-Display mit Lichtwellenleiter;
- Fig. 4: zeigt schematisch ein Head-Up-Display mit Lichtwellenleiter in einem Kraftfahrzeug;
- Fig. 5: zeigt schematisch ein erfindungsgemäßes Head-Up-Display mit einer bildgebenden Einheit, einer Einkoppeleinheit und einem Lichtwellenleiter;
- Fig. 6: veranschaulicht die Funktionsweise einer in der Einkoppeleinheit angeordneten optischen Komponente;
- Fig. 7: zeigt schematisch eine perspektivische Ansicht eines Lichtwellenleiters eines erfindungsgemäßen Head-Up-Displays
- Fig.8: zeigt beispielhaft den Verlauf eines kollimierten Strahlenbündels in einem Lichtwellenleiter;
- Fig.9: zeigt diesen Verlauf für zwei unterschiedliche Winkel im Vergleich; und
- Fig.10: zeigt beispielhaft Strahlformung gemäß der Erfindung.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

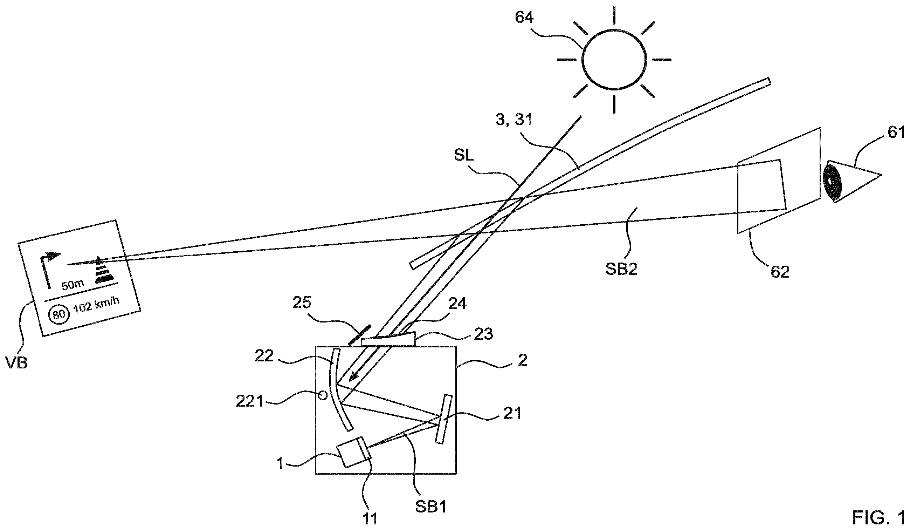

Zunächst soll anhand der Figuren 1 bis 4 der Grundgedanke eines Head-Up-Displays mit Lichtwellenleiter dargelegt werden.

Fig. 1 zeigt eine Prinzipskizze eines Head-Up-Displays gemäß dem Stand der Technik für ein Kraftfahrzeug. Das Head-Up-Display weist einen Bildgenerator 1, eine Optikeinheit 2 und eine Spiegeleinheit 3 auf. Von einem Anzeigeelement 11 geht ein Strahlenbündel SB1 aus, welches von einem Faltspiegel 21 auf einen gekrümmten Spiegel 22 reflektiert wird, der es Richtung Spiegeleinheit 3 reflektiert. Die Spiegeleinheit 3 ist hier als Windschutzscheibe 31 eines Kraftfahrzeugs dargestellt. Von dort gelangt das Strahlenbündel SB2 in Richtung eines Auges 61 eines Betrachters.

Der Betrachter sieht ein virtuelles Bild VB, welches sich außerhalb des Kraftfahrzeugs oberhalb der Motorhaube oder sogar vor dem Kraftfahrzeug befindet. Durch das Zusammenwirken von Optikeinheit 2 und Spiegeleinheit 3 ist das virtuelle Bild VB eine vergrößerte Darstellung des vom Anzeigeelement 11 angezeigten Bildes. Hier sind symbolisch eine Geschwindigkeitsbegrenzung, die aktuelle Fahrzeuggeschwindigkeit sowie Navigationsanweisungen dargestellt. So lange sich das Auge 61 innerhalb der durch ein Rechteck angedeuteten Eyebox 62 befindet, sind alle Elemente des virtuellen Bildes für das Auge 61 sichtbar. Befindet sich das Auge 61 außerhalb der Eyebox 62, so ist das virtuelle Bild VB für den Betrachter nur noch teilweise oder gar nicht sichtbar. Je größer die Eyebox 62 ist, desto weniger eingeschränkt ist der Betrachter bei der Wahl seiner Sitzposition.

Die Krümmung des gekrümmten Spiegels 22 dient zum einen dazu, den Strahlengang aufzubereiten und somit für ein größeres Bild und eine größere Eyebox 62 zu sorgen. Zum anderen gleicht die Krümmung eine Krümmung der Windschutzscheibe 31 aus, sodass das virtuelle Bild VB einer vergrößerten Wiedergabe des vom Anzeigeelement 11 dargestellten Bildes entspricht. Der gekrümmte Spiegel 22 ist mittels einer Lagerung 221 drehbar gelagert. Die dadurch ermöglichte Drehung des gekrümmten Spiegels 22 ermöglicht ein Verschieben der Eyebox 62 und somit eine Anpassung der Position der Eyebox 62 an die Position des Auges 61. Der Faltspiegel 21 dient dazu, dass der vom Strahlenbündel SB1 zurückgelegte Weg zwischen Anzeigeelement 11 und gekrümmtem Spiegel 22 lang ist, und gleichzeitig die Optikeinheit 2 dennoch kompakt ausfällt. Die Optikeinheit 2 wird durch eine transparente Abdeckung 23 gegen die Umgebung abgegrenzt. Die optischen Elemente der Optikeinheit 2 sind somit beispielsweise gegen im Innenraum des Fahrzeugs befindlichen Staub geschützt. Auf der Abdeckung 23 befindet sich weiterhin eine optische Folie 24 oder eine Beschichtung, die einfallendes Sonnenlicht SL daran hindern soll, über die Spiegel 21, 22 auf das Anzeigeelement 11 zu gelangen. Dieses könnte sonst durch eine dabei auftretende Wärmeentwicklung vorübergehend oder auch dauerhaft geschädigt werden. Um dies zu verhindern, wird beispielsweise ein Infrarotanteil des Sonnenlichts SL mittels der optischen Folie 24 ausgefiltert. Ein Blendschutz 25 dient dazu, von vorne einfallendes Licht abzuschatten, sodass es nicht von der Abdeckung 23 in Richtung Windschutzscheibe 31 reflektiert wird, was eine Blendung des Betrachters hervorrufen könnte. Außer dem Sonnenlicht SL kann auch das Licht einer anderen Störlichtquelle 64 auf das Anzeigeelement 11 gelangen.

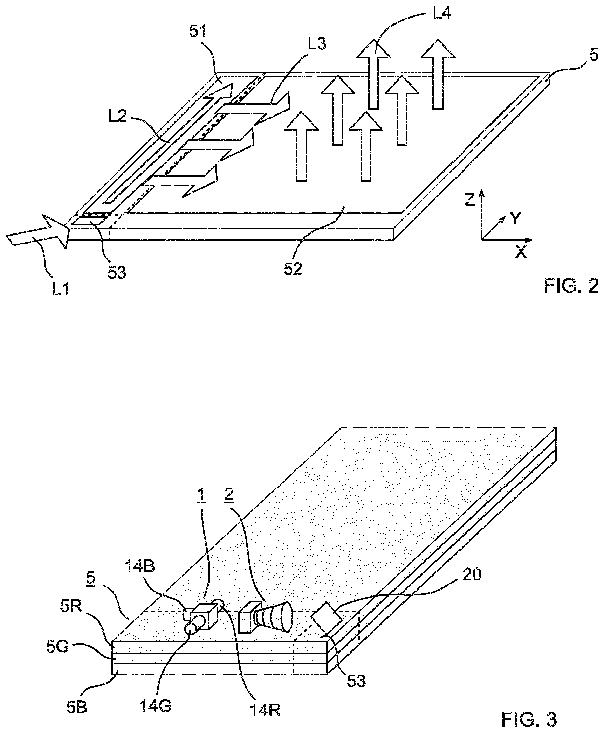

Fig. 2 zeigt in schematischer räumlicher Darstellung einen Lichtwellenleiter 5 mit zweidimensionaler Vergrößerung. Im unteren linken Bereich erkennt man ein Einkoppelhologramm 53, mittels dessen von einer nicht dargestellten bildgebenden Einheit kommendes Licht L1 in den Lichtwellenleiter 5 eingekoppelt wird. In diesem breitet es sich in der Zeichnung nach rechts oben aus, entsprechend dem Pfeil L2. In diesem Bereich des Lichtwellenleiters 5 befindet sich ein Falthologramm 51, das ähnlich wie viele hintereinander angeordnete teildurchlässige Spiegel wirkt, und ein in Y-Richtung verbreitertes, sich in X-Richtung ausbreitendes Lichtbündel erzeugt. Dies ist durch drei Pfeile L3 angedeutet. In dem sich in der Abbildung nach rechts erstreckenden Teil des Lichtwellenleiters 5 befindet sich ein Auskoppelhologramm 52, welches ebenfalls ähnlich wie viele hintereinander angeordnete teildurchlässige Spiegel wirkt, und durch Pfeile L4 angedeutet Licht in Z-Richtung nach oben aus dem Lichtwellenleiter 5 auskoppelt. Hierbei erfolgt eine Verbreiterung in X-Richtung, sodass das ursprüngliche einfallende Lichtbündel L1 als in zwei Dimensionen vergrößertes Lichtbündel L4 den Lichtwellenleiter 5 verlässt.

Fig. 3 zeigt in räumlicher Darstellung ein Head-Up-Display mit drei Lichtwellenleitern 5R, 5G, 5B, die übereinanderliegend angeordnet sind und für je eine Elementarfarbe Rot, Grün und Blau stehen. Sie bilden gemeinsam den Lichtwellenleiter 5. Die in dem Lichtwellenleiter 5 vorhandenen Hologramme 51, 52, 53 sind wellenlängenabhängig, sodass jeweils ein Lichtwellenleiter 5R, 5G, 5B für eine der Elementarfarben verwendet wird. Oberhalb des Lichtwellenleiters 5 sind ein Bildgenerator 1 und eine Optikeinheit 2 dargestellt. Die Optikeinheit 2 weist einen Spiegel 20 auf, mittels dessen das vom Bildgenerator 1 erzeugte und von der Optikeinheit 2 geformte Licht in Richtung des jeweiligen Einkoppelhologramms 53 umgelenkt wird. Der Bildgenerator 1 weist drei Lichtquellen 14R, 14G, 14B für die drei Elementarfarben auf. Man erkennt, dass die gesamte dargestellte Einheit eine im Vergleich zu ihrer lichtabstrahlenden Fläche geringe Gesamtbauhöhe aufweist.

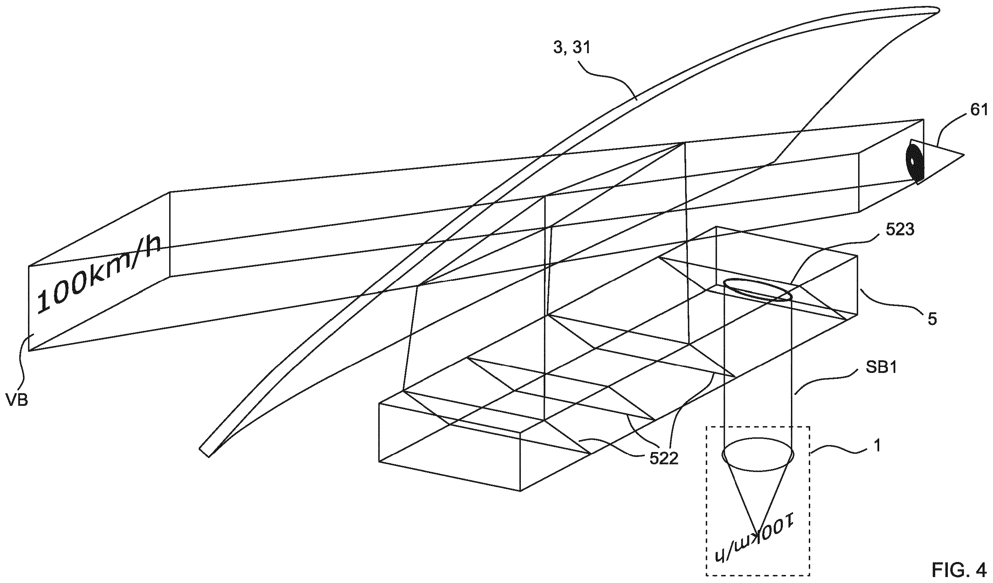

Fig. 4 zeigt ein Head-Up-Display in einem Kraftfahrzeug ähnlich zu Fig. 1, hier allerdings in räumlicher Darstellung und mit einem Lichtwellenleiter 5. Man erkennt den schematisch angedeuteten Bildgenerator 1, der ein paralleles Strahlenbündel SB1 erzeugt, welches mittels der Spiegelebene 523 in den Lichtwellenleiter 5 eingekoppelt wird. Die Optikeinheit ist der Einfachheit halber nicht dargestellt. Mehrere Spiegelebenen 522 reflektieren jeweils einen Teil des auf sie auftreffenden Lichts Richtung Windschutzscheibe 31, der Spiegeleinheit 3. Von dieser wird das Licht Richtung Auge 61 reflektiert. Der Betrachter sieht ein virtuelles Bild VB über der Motorhaube bzw. in noch weiterer Entfernung vor dem Kraftfahrzeug.

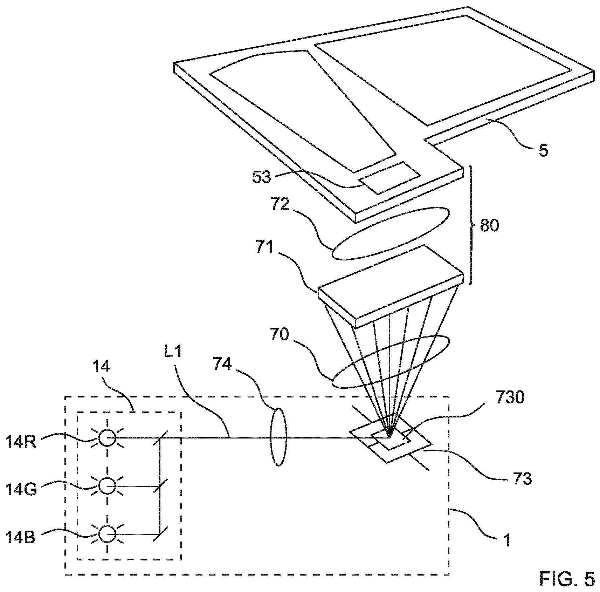

Fig. 5 zeigt schematisch ein erfindungsgemäßes Head-Up-Display mit einer bildgebenden Einheit 1, einer Einkoppeleinheit 80 und einem Lichtwellenleiter 5. Zur Verwendung kommt in diesem Beispiel eine bildgebenden Einheit 1 mit einer Lichtquelle 14 und einem Mikroscanner 73. Die Lichtquelle 14 besteht aus mindestens einem Laser, maximal aber aus vier Lasern für unterschiedliche Wellenlängenbereiche. Beispielsweise können die Laser eine RGBY-Lichtquelle implementieren und somit rotes, grünes, blaues und gelbes Licht abstrahlen. In Fig. 5 sind drei Lichtquellen 14R, 14G, 14B für rotes, grünes und blaues Licht dargestellt. Die drei Lichtquellen 14R, 14G, 14B werden jeweils zeitlich in ihrer Intensität moduliert. Das Licht L1 der Lichtquelle 14 wird durch eine Optik 74 auf einen in mindestens einer Richtung oszillierenden Spiegel 730 des Mikroscanners 73 fokussiert. Vorzugsweise wird dabei eine Strahltaille mit einem Durchmesser kleiner als 1,5mm genutzt. Der Spiegel 730 lenkt entsprechend seiner Oszillation das Licht L1 auf eine Einkoppeleinheit 80 für den Lichtwellenleiter 5. Erfindungsgemäß befindet sich zwischen dem Mikroscanner 73 und der Einkoppeleinheit 80 ein erstes optisches Element 70, das das Licht L1 auf eine optische Komponente 71 der Einkoppeleinheit 80 fokussiert und dabei optional Bildfehler minimiert, z.B. die Bildfeldwölbung reduziert.

Die Einkoppeleinheit 80 umfasst zusätzlich zur optischen Komponente 71 ein Einkoppelhologramm 53 des Lichtwellenleiters 5 und ein zweites optisches Element 72. Die optische Komponente 71 lenkt einen einfallenden Lichtstrahl L1 für unterschiedliche Auftreffpositionen in unterschiedliche Raumwinkelbereiche. Das zweite optische Element 72 kollimiert das von der optischen Komponente 71 geformte divergente Lichtbündel. Dabei werden die jeweiligen Raumwinkelbereiche in räumliche Aperturflächen transformiert. Das Einkoppelhologramm 53 koppelt das einfallende kollimierte Licht in den Lichtwellenleiter 5 ein. Die Einkoppeleinheit 80 des Lichtwellenleiters 5 wandelt somit einen unter einem Winkel einfallenden Lichtstrahl L1 in einen propagierenden Lichtstrahl im Material des Lichtwellenleiters 5 um. Die zeitliche Modulation der Intensität des Lichtstrahls L1 wird entsprechend der Oszillation zur Darstellung des Bildinhaltes gesteuert.

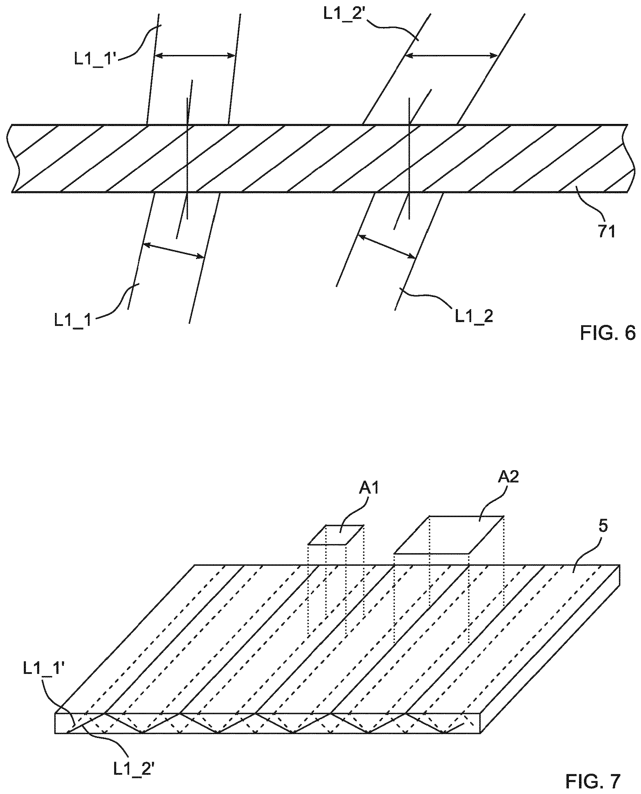

Fig. 6 veranschaulicht die Funktionsweise der in der Einkoppeleinheit angeordneten optischen Komponente 71. Die vom Mikroscanner abgelenkten Lichtstrahlen L1_1, L1_2 treffen in mindestens einer Raumrichtung entsprechend der Oszillation des Spiegels in einer definierten Winkel-zu-Positions-Beziehung auf die optische Komponente 71. Diese füllt für unterschiedliche Auftreffpositionen der einfallenden Lichtstrahlen L1_1, L1_2 unterschiedliche Raumwinkelbereiche aus. Beispielhaft ist die Wandlung von eingehenden Lichtstrahlen L1_1, L1_2, die unter einem definierten Winkel einfallen, in ausgehende Lichtstrahlen L1_1', L1_2' mit einer spezifischen Apertur, die möglicherweise unter einem anderen Winkel ausfallen, dargestellt. Die optische Komponente 71 kann darüber hinaus weitere optische Funktionen umfassen, wie beispielsweise eine fresnelisierte Linsenfunktion. Die optische Komponente 71 kann beispielsweise als flaches Kunststoffteil mit lokal aufgelöster Diffusor- und Linsenfunktion entsprechend der gewünschten Ortsfunktion für die Ablenkung der einfallenden Lichtstrahlen L1_1, L1_2 in die unterschiedlichen Raumwinkelbereiche ausgeführt sein.

Gemäß einer Ausführungsform weist die optische Komponente 71 ein Hologramm oder ein Mikrolinsenarray auf. Bei der Realisierung als Mikrolinsenarray können entsprechend der gewünschten Ortsfunktion angepasste variable Linsenabstände und Brennweiten genutzt werden.

Fig. 7 zeigt schematisch eine perspektivische Ansicht eines Lichtwellenleiters 5 eines erfindungsgemäßen Head-Up-Displays. Zu sehen ist, dass die unter verschiedenen Winkeln in den Lichtwellenleiter 5 eingekoppelten Lichtstrahlen L1_1', L1_2 unterschiedliche spezifische Aperturen A1, A2 ausfüllen. Durch die Propagation des Lichtes im Lichtwellenleiter 5 wird bei Laser-Lichtquellen mit kleiner Apertur herkömmlicherweise keine Ausleuchtung der gesamten Eyebox durch jeden einzelnen Punkt, der vom Scanner generiert wird, erreicht. Durch die erfindungsgemäße optische Komponente, die für den jeweiligen Bereich der Bildgenerierung spezifisch entworfen ist, wird örtlich aufgelöst eine angepasste Apertur A1, A2 erzeugt. Dies ermöglicht eine homogenere Füllung der Auskoppelapertur des Lichtwellenleiters 5 und damit der Eyebox.

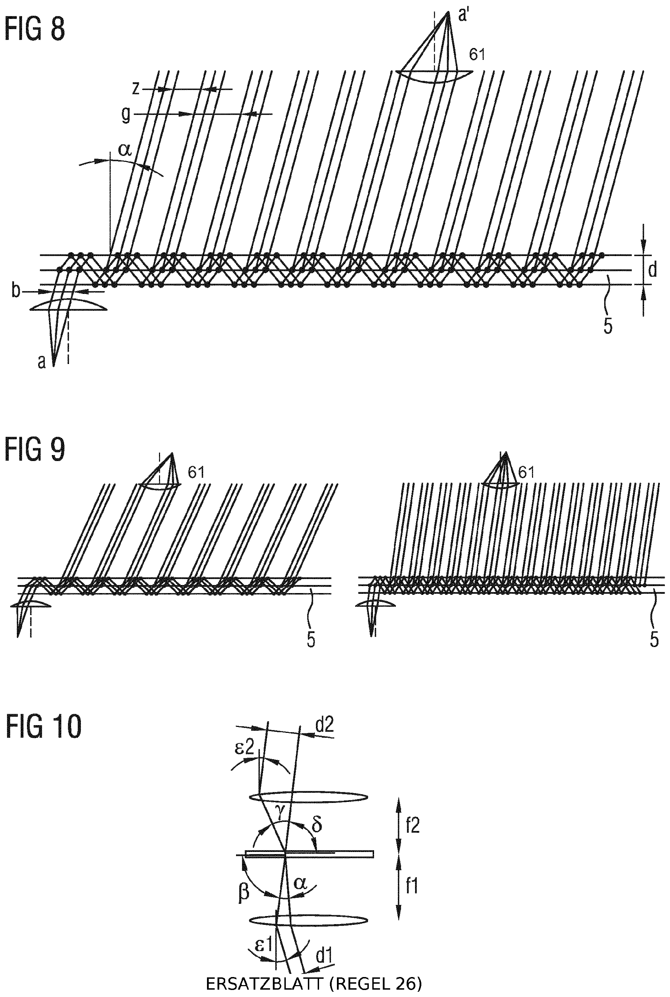

Fig. 8 zeigt schematisch den Verlauf eines kollimierten Strahlenbündels in einem Lichtwellenleiter. Bei dem beschriebenen Head-Up-Display ist üblicherweise eine Darstellung eines virtuellen Bildes weit (in Metern gemessen) hinter der Ausgangsapertur des beschriebenen Head-Up-Displays angestrebt. Diese liegt vorzugsweise über dem Kühler eines Kraftfahrzeugs an der Fahrzeugfront oder - insbesondere für Augmented-Reality-Anwendungen - weiter vor dem Fahrzeug. Ein Weg zur Realisierung von besonderen Merkmalen der Bildeinkopplung wird anhand von Fig.7 erläutert. Beim Head-Up-Display mit Lichtwellenleitertechnologie wird ein Pixel auf dem Bildgeber (Bildpunkt a) durch die Optik der bildgebenden Einheit 1 in ein kollimiertes Bündel mit der projizierten Breite b (Apertur) und dem Winkel α übersetzt. Befindet sich das Auge 61 des Betrachters im Auskopplungsbereich, entsteht bei Akkomodation auf die Ferne im Auge des Betrachters der zu a korrespondierende abgebildete Punkt a'. Die Apertur der Optik der bildgebenden Einheit 1 wird durch Spiegelungen bei der Propagation des Lichts mittels Totalreflexion und durch schrittweises Auskoppeln durch das Gitter mehrfach repliziert. Dabei ist die Periode g, mit der sich die Auskopplungen wiederholen, von der Glasdicke d und dem Winkel, unter dem das Bündel im Waveguide propagiert, abhängig. Ein Ziel der Erfindung ist es, eine möglichst gleichmäßige Ausleuchtung der Ausgangsapertur durch Aneinanderreihung von Spiegelungen der Apertur der Optik der bildgebenden Einheit 1 zu erreichen, um Bildwiedergabefehler wie Streifen zu vermeiden. Dazu soll die Lücke z=g-b kontrolliert, d.h**.** gemäß der Erfindung eliminiert werden (z=0). Gemäß der Erfindung strebt man b=g an.

Die Periode g hängt über den Propagationswinkel im Lichtwellenleiter 5 vom Feldpunkt ab. Fig.9 zeigt den Verlauf eines kollimierten Lichtbündels für zwei unterschiedliche Winkel α im Vergleich, links für einen größeren Winkel als rechts. Es sei darauf hingewiesen, dass die Lichtstrahlen L1_1, L1_1', L1_2, L1_2' jeweils ausgedehnte Gruppen von Lichtstrahlen bilden. Diese Gruppen werden auch als Lichtbündel bezeichnet. Diese Lichtbündel weisen eine gewisse Breite auf.

In der Erfindung wird eine möglichst gleichmäßige Ausleuchtung über Strahlformung gelöst. Im Beispiel der Fig. 10 wird ein Strahlbündel mit dem Durchmesser d1 angenommen, das z.B. mit einem Mikroscanner das Bildfeld abtastet. Dabei variiert der Auftreffwinkel ε1 auf die Ebene des ersten optischen Elements mit der Brennweite f1, die das Bündel in einen kleinen Bereich der Optischen Komponente fokussiert. Dabei hängt der Auftreffpunkt auf diese direkt von ε1 und damit vom Feldpunkt ab. Der Öffnungswinkel α hingegen ist durch d1 gegeben, beides wenn ein festes f1 vorausgesetzt ist. Mit der optischen Komponente, z.B. einer optischen Mikrostruktur, wird das einfallende Bündel nun umgelenkt und aufgeweitet.

Das heißt für jeden Auftreffbereich wird individuell festgelegt, wie groß der Winkelbereich γ ist, in den das einfallende Licht verteilt wird, solange γ≥α gilt, und die Orientierung δ, in der das Licht liegt. Ein zweites optisches Element mit der Brennweite f2 transformiert das Licht wieder in ein kollimiertes Bündel, dessen Durchmesser d2 durch γ bestimmt wird und der Winkel ε2 durch die Position auf der optischen Komponente. Dadurch lässt über sich für die optische Komponente zu jedem ε2 das passende d2 und damit effektiv b einstellen, so dass b=g erreicht wird.

Über δ kann man die Lage der Austrittsapertur steuern, was von Vorteil ist, um das Einkoppelgitter für jeden Feldpunkt gleich zu treffen. Über das Verhältnis der effektiven Brennweiten kann man eine Übersetzung des Winkelbereichs realisieren, also aus einem gegebenen Scanwinkel das gewünschte Bildfeld des Systems erzeugen.

Das Funktionsprinzip bleibt gleich, wenn andere Bilderzeugungstechniken verwendet werden. Bei Abbildung eines SLM, z.B. eines DMD(Digital Micromirror Device)-Projektors, ist das erste optische Element z.B. typischerweise Bestandteil des Projektors. Aufgrund der Parallelen der optischen Komponente zur DMD-Zwischenbildebene wird die ablenkende Wirkung als Linsenfunktion bezeichnet, und die Aufweitung als Diffusorfunktion.

## Patentansprüche

1. Gerät zum Generieren eines virtuellen Bildes (VB), mit:
- zumindest einer Lichtquelle (14, 14R, 14G, 14B) zum Erzeugen eines Lichtstrahls (L1);
- einer bildgebenden Einheit (1) zum Erzeugen eines Bildes; und
- einem Lichtwellenleiter (5, 5R, 5G, 5B) zum Aufweiten einer Austrittspupille;
**dadurch gekennzeichnet, dass**
- die bildgebende Einheit (1) einen Microscanner (73) aufweist, und
- vor einem Einkoppelbereich des Lichtwellenleiters (5, 5R, 5G, 5B) eine Anordnung umfassend ein erstes optisches Element (70) mit einer ersten Brennweite (f1), eine optische Komponente (71) zum Realisieren einer feldpunktabhängigen Apertur und ein zweites optisches Element (72) mit einer zweiten Brennweite (f2) angeordnet ist, wobei die optische Komponente (71) eingerichtet ist, für unterschiedliche Auftreffpositionen eines ausgehend vom Microscanner (73) nach Passieren des ersten optischen Elementes (70) einfallenden Lichtstrahls (L1_1, L1_2) den Lichtstrahl (L1_1, L1_2) in unterschiedliche Raumwinkelbereiche zu lenken, wobei die optische Komponente (71) ein Mikrolinsenarray mit entsprechend einer lokal aufgelösten Diffusorfunktion und Linsenfunktion variablen Linsenabständen und Brennweiten aufweist, und wobei die lokal aufgelöste Diffusorfunktion und Linsenfunktion so gewählt ist, dass der Ausgangsstrahldurchmesser (b, d2) des Lichtstrahls (L1_1', L1_2') nach dem Passieren des zweiten optischen Elementes (72) gleich der Periode (g) der Auskopplung des Lichtstrahls (L1_1', L1_2') aus dem Lichtwellenleiter (5, 5R, 5G, 5B) ist, und wobei von der bildgebenden Einheit (1) ausgehende Lichtstrahlen (L1_1, L1_2) von dem ersten optischen Element (70) auf die optische Komponente (71) fokussiert werden und das zweite optische Element (72) von der optischen Komponente (71) ausgehende Lichtstrahlen (L1_1', L1_2') kollimiert.

2. Gerät gemäß einem der vorherigen Ansprüche, wobei die Lichtquelle (14, 14R, 14G, 14B) ein Laser ist.

3. Fahrzeug mit einem Gerät gemäß einem der Ansprüche 1 bis 2 zum Generieren eines virtuellen Bildes (VB) für einen Fahrer des Fahrzeugs.

## Claims

1. Device for generating a virtual image (VB), comprising:
- at least one light source (14, 14R, 14G, 14B) for producing a light beam (L1);
- a picture-generating unit (1) for producing an image; and
- an optical waveguide (5, 5R, 5G, 5B) for expanding an exit pupil;
**characterized in that**
- the picture-generating unit (1) has a microscanner (73), and
- an arrangement comprising a first optical element (70) having a first focal length (f1), an optical component (71) for realizing a field-point-dependent aperture and a second optical element (72) having a second focal length (f2) is arranged upstream of a coupling-in region of the optical waveguide (5, 5R, 5G, 5B), wherein the optical component (71) is set up to direct, for different incidence positions of a light beam (L1_1, L1_2) that is incident from the microscanner (73) after passing the first optical element (70), the light beam (L1_1, L1_2) into different solid-angle regions, wherein the optical component (71) has a microlens array having lens distances and focal lengths that are variable according to a locally resolved diffuser function and lens function, and wherein the locally resolved diffuser function and lens function is selected such that the output beam diameter (b, d2) of the light beam (L1_1', L1_2') after passing the second optical element (72) is equal to the period (g) of the coupling-out of the light beam (L1_1', L1_2') from the optical waveguide (5, 5R, 5G, 5B), and wherein light beams (L1_1, L1_2) emanating from the picture-generating unit (1) are focused by the first optical element (70) at the optical component (71) and the second optical element (72) collimates light beams (L1_1', L1_2') emanating from the optical component (71).

2. Device according to the preceding claim, wherein the light source (14, 14R, 14G, 14B) is a laser.

3. Vehicle having a device according to one of Claims 1 to 2 for generating a virtual image (VB) for a driver of the vehicle.

## Revendications

1. Appareil destiné à générer une image virtuelle (VB), comprenant :
- au moins une source de lumière (14, 14R, 14G, 14B) destinée à générer un faisceau lumineux (L1) ;
- une unité de formation d'image (1) destinée à générer une image ; et
- un conducteur à fibres optiques (5, 5R, 5G, 5B) destiné à élargir une pupille de sortie ;
**caractérisé en ce que**
- l'unité de formation d'image (1) comporte un micro-scanner (73), et
- devant une zone d'injection du conducteur à fibres optiques (5, 5R, 5G, 5B) est agencé un ensemble comprenant un premier élément optique (70) ayant une première distance focale (f1), un composant optique (71) destiné à réaliser une ouverture dépendante du point de champ et un deuxième élément optique (72) ayant une deuxième distance focale (f2), le composant optique (71) étant conçu pour diriger le faisceau lumineux (L1_1, L1_2) dans différents domaines d'angle solide pour différentes positions d'incidence d'un faisceau lumineux (L1_1, L1_2) incident sortant du micro-scanner (73) après passage à travers le premier élément optique (70), le composant optique (71) comportant un réseau de microlentilles ayant des distances de lentilles et des distances focales variables correspondant à une fonction de diffusion et à une fonction de lentille à résolution locale, et la fonction de diffusion et la fonction de lentille à résolution locale étant choisies de telle sorte que le diamètre de faisceau de sortie (b, d2) du faisceau lumineux (L1_1', L1_2') après passage à travers le deuxième élément optique (72) soit égal à la période (g) d'extraction du faisceau lumineux (L1_1', L1_2') hors du conducteur à fibres optiques (5, 5R, 5G, 5B), et les faisceaux lumineux (L1_1, L1_2) sortant de l'unité de formation d'image (1) étant focalisés par le premier élément optique (70) sur le composant optique (71) et le deuxième élément optique (72) collimatant les faisceaux lumineux (L1_1', L1_2') sortant du composant optique (71).

2. Appareil selon l'une quelconque des revendications précédentes, dans lequel la source de lumière (14, 14R, 14G, 14B) est un laser.

3. Véhicule comprenant un appareil selon l'une quelconque des revendications 1 à 2, destiné à générer une image virtuelle (VB) pour un conducteur du véhicule.
